# EUROPEAN PATENT SPECIFICATION

(11) **EP 3 679 804 B1**
(45) Date of publication and mention of the grant of the patent: **21.08.2024**
(21) Application number: 20151057.5
(22) Date of filing: 09.01.2020
(51) Int. Cl.: A23G 9/22, A23L 3/015, A23L 3/3418

(54) **ASSEMBLY FOR PRODUCING A VACUUM**
ZUSAMMENFÜGUNG ZUR ERZEUGUNG EINES VAKUUMS
ENSEMBLE POUR PRODUIRE UN VIDE

(30) Priority: 14.01.2019 IT 201900000555; 08.01.2020 IT 202000000133
(43) Date of publication of application: 15.07.2020
(73) Proprietor: BRAVO S.p.A., 36075 Montecchio Maggiore (Vicenza) (IT)
(72) Inventor: BRAVO, STEFANO, 36050 SOVIZZO - VICENZA (IT)
(74) Representative: Dragotti & Associati S.R.L.

(56) References cited:
- WO-A1-84/00745
- WO-A2-2004/091304
- FR-A3- 2 938 730
- US-A- 4 803 919
- US-A- 757 895
- US-A1- 2004 226 458

## Description

The present invention relates to an assembly for the production of vacuum that can be applied to a machine suitable for the treatment of food substances, in particular liquid food substances intended for the preparation of ice-cream, pastry, and gastronomic products.

Vacuum cooking has been a well-known technique in kitchens since the time of its inventor Georges Pralus. The main use of this technique was limited to extending the life of the finished products so as to reduce food waste. Vacuum cooking in fact referred to the cooking of various food products, their packaging under vacuum and re-cooking in a water bath for long periods of time at low temperatures, but always inside the hermetic packaging.

This allowed a reorganization of kitchens which could freeze and store pre-cooked semi-finished products for a long time in refrigerators, for subsequent use with simple re-cooking. Furthermore, the packaging of the products ensured their sealing not only from air (or possibly using inert gases) but also of all the aromas that were concentrated in these bags. In addition to this effect, there was also that of less oxidation and less weight loss as the water does not evaporate.

In pastry, the product cannot be vacuum-packed and then cooked afterwards. The processing of the recipe itself must be effected dynamically under vacuum. This allows boiling to be reached at low temperatures, triggering gelation chemical processes that usually take place at around 100°C. With low pressures, in fact, the surface tension of the water is also lowered and will tend to evaporate more rapidly, triggering vapour phase in the mixture. This advance boiling however does not anticipate the cooking and consequently the properties of the vitamins and proteins remain intact without denaturation processes. The main effect is to have a much tastier finished product as milk, eggs, aromas have kept the aromatic chains intact without denaturing them.

The aromatic components (usually expensive) can therefore be reduced, in any case having a final product rich in flavour.

There is also the advantage of reducing cooking times as the heating must not reach high temperatures.

The recipes must be rebalanced due to the strong drying that causes the vacuum but in this way the flavours can be concentrated, and furthermore the binding effect is obtained by decreasing all the starches.

Given the above, devices and/or equipment for producing vacuum in the food sector are already known: these devices however have the drawback of being integrated/incorporated in the treatment machine of the food substance, and consequently their construction and application is exclusively dedicated and limited to a specific type of machine.

US 2004/226458 relates to an apparatus for the production of table vacuum or to be attached to the wall to be used with food and drink in the kitchens of homes or restaurants to increase the shelf-life of the products, not for cooking them.

WO 84/00745 relates to improvements relating to vacuum containers for the preservation of the materials contained therein.

US 757895 relates to an apparatus for discharging air from containers or barrels containing fruit or food products.

US 4,803,919 relates to a cooking apparatus including a cooking vat and a hinged lid responsive to a control mechanism and provided with devices for vacuumising and pressurising the vat, respectively. The general objective of the present invention is to overcome the above-mentioned drawback of the prior art by creating an assembly for the production of vacuum which is completely independent of the type of treatment machine of the food substance, i.e. that can be applied to various machines having different configurations, and that can operate with the machine.

The specific objective of the present invention is to provide an assembly for the production of vacuum which can be applied to machines for the treatment of food mixtures comprising a container/recipient/tank in which the food mixture is mixed, heated and/or cooled to be then sent to subsequent treatment/processing steps.

Machines of this type are generally called multifunctional food machines.

Machines of this type are well-known on the market and, by way of non-limiting example, can, for example, be those known on the market with the registered trademark "TRITTICO", of the company Bravo S.p.A .

The invention can of course also be applied to other types of machines well-known in the preparation of pastry, ice-cream and GASTRONOMIC products.

A machine for the treatment of food mixtures used in ice-cream, pastry and gastronomy is described for example in patent AR043605 in the name of BRAVO SPA, to which reference should be made for any necessary clarifications.

The above-mentioned objectives are achieved by an assembly for the production of vacuum as claimed in the enclosed claim 1 and its dependent claims.

The structural and functional characteristics of the present invention and its advantages with respect to the known art will be even more evident from the following description, referring to the attached schematic drawings, which show an implementation example of the invention itself. In the drawings:
- figure 1 is a perspective view illustrating an example of an assembly for the production of vacuum produced according to the invention which can be applied to a multifunctional machine suitable for the treatment of food mixtures;
- figure 2 is an enlarged perspective view illustrating the lid of the assembly;
- figure 3 is an enlarged perspective view illustrating the group for the production of vacuum;
- figures 4 and 5 are two perspective views illustrating the application of an assembly for the production of vacuum according to the invention to a machine for the treatment of food substances;
- figure 6 is a perspective view illustrating in greater detail the handle-frame carrying the lid of the assembly;
- figures 7, 8 and 9 are three perspective views illustrating an application of a further assembly for the production of vacuum according to the invention to a machine for the treatment of food substances.

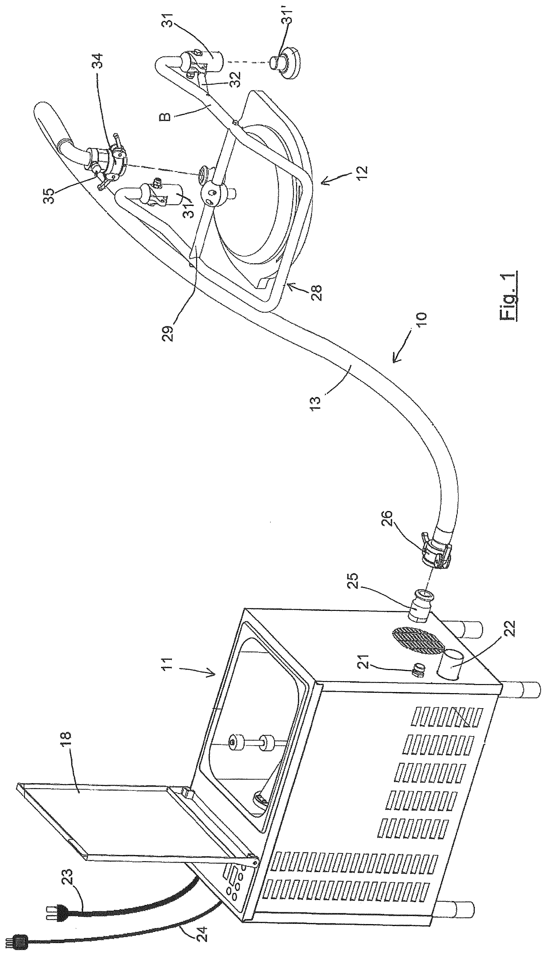

With reference to figure 1 of the drawings, an example of an assembly for the production of vacuum produced according to the present invention is indicated as a whole with 10 and is structurally composed of the combination: of a group 11 for the production of vacuum, a cover 12, and an armoured or spiral flexible tube 13 suitable for operatively interconnecting said group 11 and cover 12.

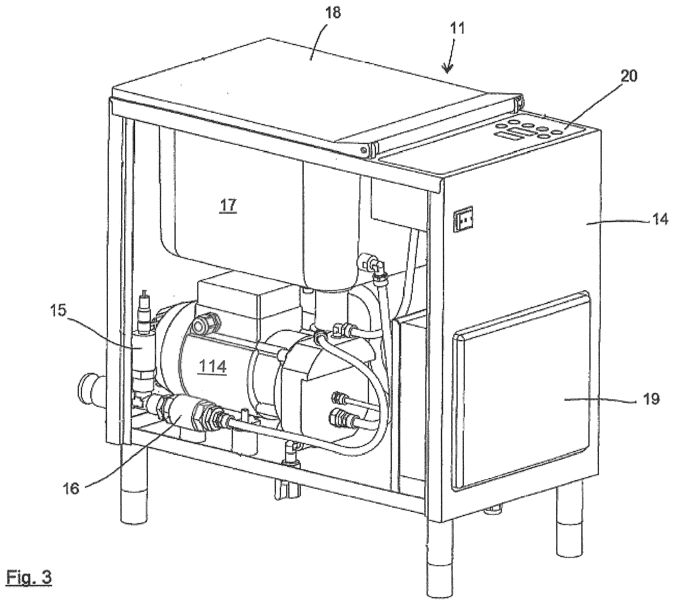

With reference also to figure 3, the group 11 for the production of vacuum consists of a casing or body 14 containing a vacuum pump 114 equipped with a vacuum sensor 15, a non-return valve 16, and a tank for the water 17 with a lid 18.

19 indicates the electrical panel and 20 indicates the control keyboard of the group 11.

The water is fed to the tank 17 through a water inlet 21 and is discharged through a water drain 22 (figure 1).

The group 11 is also provided with a power supply cable 23 and a cable 24 for the possible connection to a machine suitable for the treatment of food substances.

The group 11 also comprises a socket 25 for the insertion of a rapid coupling 26 provided at one end of the flexible tube 13.

The group 11 can also consist of a dry-running pump with a removable and cleanable vapour-filtering device.

Said group 11 can also be provided with an antenna for receiving/transmitting the commands of the machine 36 via wireless connection.

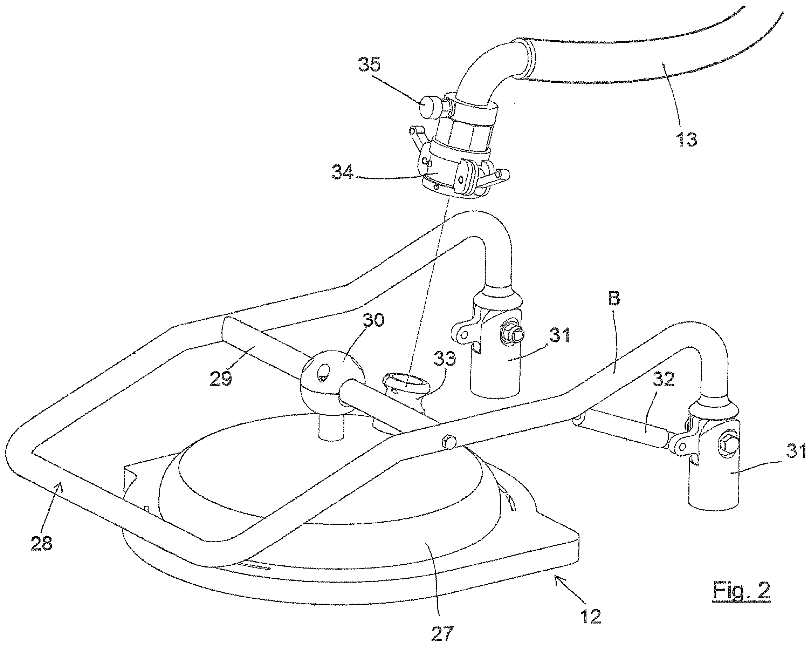

With particular reference to figure 2, the lid 12, preferably made of stainless steel, is structurally composed of a rounded body 27 which is supported by a handle-frame 28.

Said handle-frame 28 generally has a "U"-shaped configuration with a stiffening crossbar 29 which is provided in the centre with an articulated suspension joint 30 of the lid 12.

The handle-frame 28 at the free ends is provided with respective female couplings 31 suitable for coupling, in a freely removable way, with respective male couplings 31' provided on the lid C of the machine 36.

An anti-crushing safety piston 32 for the operator is interposed between at least one of said female couplings 31 and the corresponding arm B of said handle-frame 28, due to the significant weight of the stainless steel lid 12.

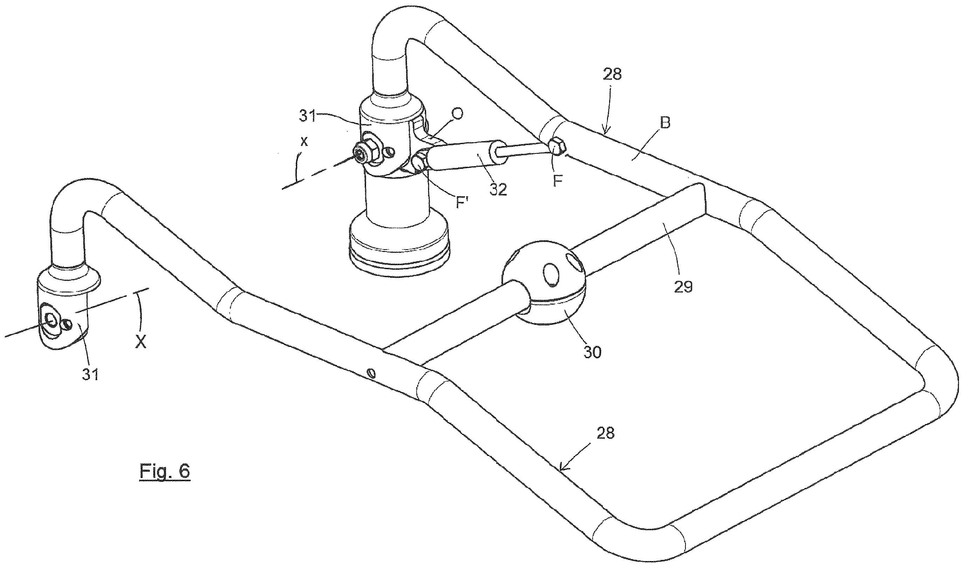

More specifically, as can be clearly seen from the detail of figure 6, the free end of the stem of said piston 32 is hinged in an articulated way around a fulcrum F to the arm B of the handle-frame 28, whereas the free end of the cylinder of said piston 32 is hinged in an articulated way around a fulcrum F' of an ear O rotatably connected to the rotation axis X of the handle-frame 28.

In this way, the assembly of the lid 12 on the machine 36 can be effected easily and rapidly, first by coupling the couplings 31 and 31' (rapid connection) and then applying the lid 12 to the container 37 of the machine 36 hermetically sealed. Thanks to the couplings 31, 31' the lid 12 is already centered with respect to the container 37.

It is evident that also the disassembly of the lid 12 can be effected with equal ease and rapidity.

Finally, the lid 12 is provided with a connection 33 for a rapid coupling 34 provided at the end of the tube 13 opposite to the coupling 26.

An air-vent valve 35 is also provided in correspondence with said rapid coupling 34.

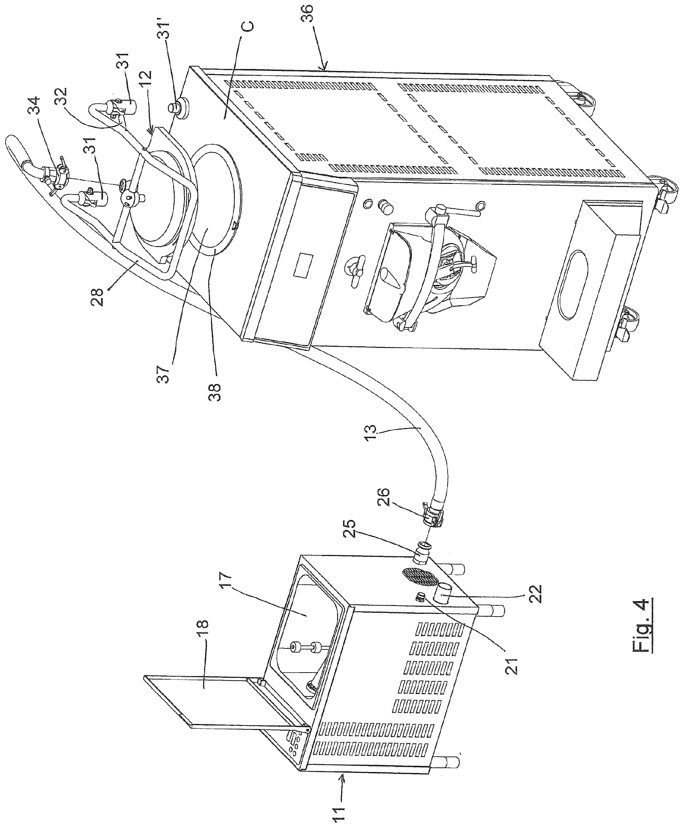

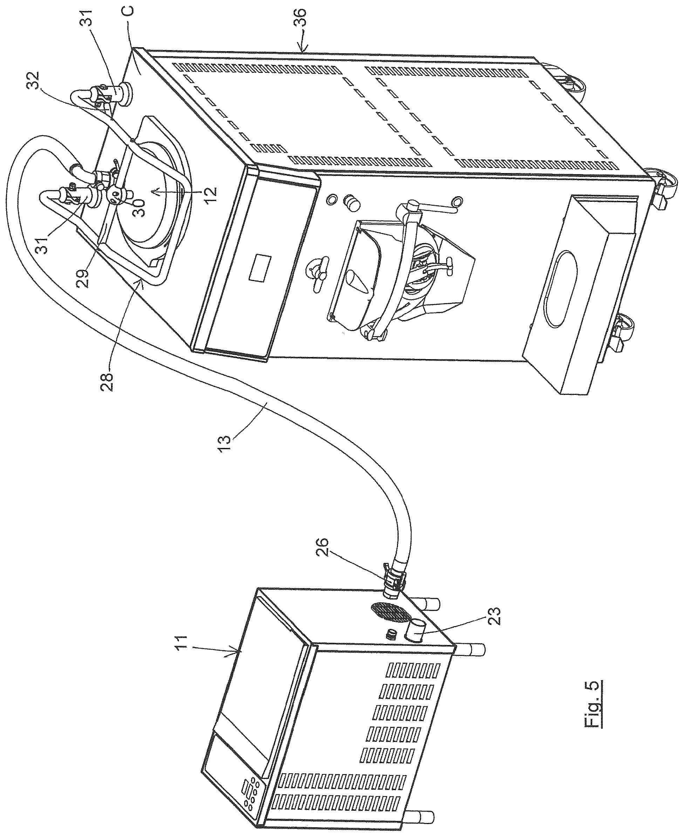

With reference to figures 4, 5, the assembly for the production of vacuum, described above, produced according to the invention, is intended to be applied to a processing machine of food substances, for example a multifunctional machine 36 known on the market with the registered trademark "TRITTICO" of the company BRAVO SPA.

For this purpose, the container 37 of said machine 36, containing the substance to be treated (for example a liquid mixture), is hermetically sealed by means of the lid 12.

The hermetic seal between the container 37 and the lid 12 is ensured by means of a circumferential seal 38 of container 37 which cooperates with a complementary seal of lid 12 (not shown).

From what is described above with reference to the figures, it is evident that the assembly for the production of vacuum according to the invention can be easily applied to any machine by simply making the lid 12 and container 37 complementary in the sense of ensuring a hermetic closure of the latter.

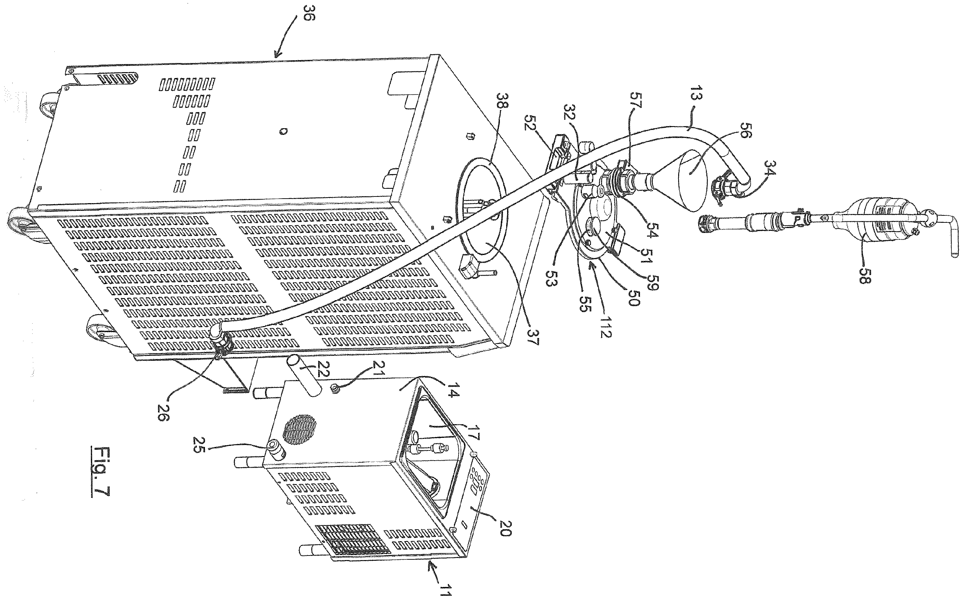

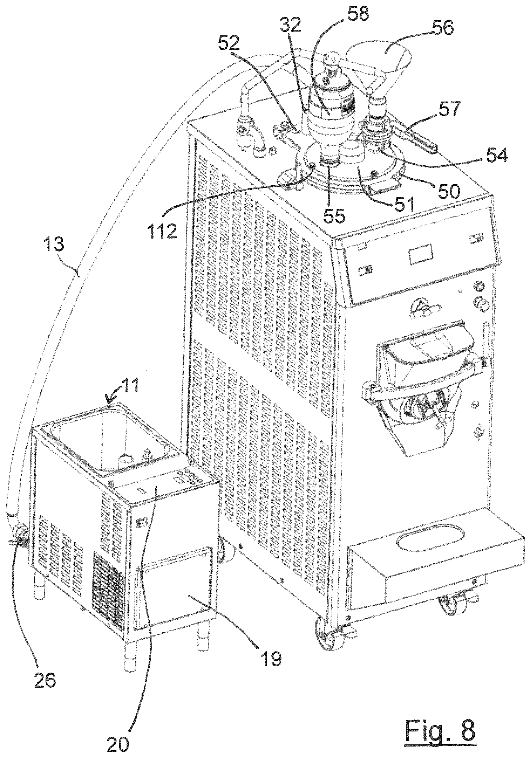

The following figures 7, 8 and 9 illustrate through three perspective views, an application of a further assembly for the production of vacuum according to the invention to a machine for the treatment of food substances. Where possible, the same reference numbers are used for the same or corresponding elements.

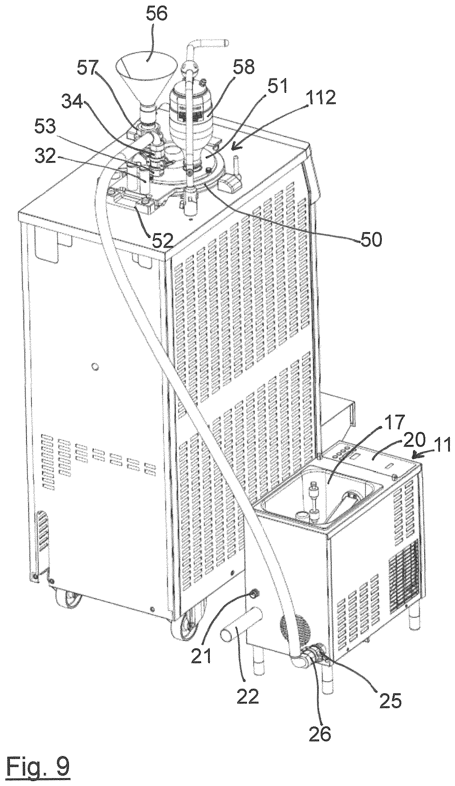

These figures 7 and 9 also show how a group 11 for the production of vacuum is connected by means of a flexible tube 13 to a lid 112 suitable for being applied as a hermetic seal on a container 37 of a machine 36 for the treatment of food substances, in particular liquid mixtures contained within said container.

The group 11 for the production of vacuum consists of a casing or body 14 which provides a water tank 17, which can be closed with a lid (not shown), equipped with an electrical panel 19 and a control keyboard 20.

Analogously, water is fed to the tank 17 through a water inlet 21 and from a water drain 22. The group 11 comprises a socket 25 for the insertion of a rapid coupling 26 provided at one end of the flexible tube 13.

In this further application example, as already mentioned, a lid 112 is provided, which in this embodiment provides an external annular structural part 50, preferably made of stainless steel or food-grade aluminum, and a transparent central area 51 for seeing the inside of the container 37. This central area can be flat or convex made of plastic or glass material.

The lid 112 in its external structural part 50 is coupled with the lid wall C of the machine 36 by means of a hinged arrangement 52 equipped with anti-crushing safety pistons 32 for the operator, given the considerable weight of the lid 112.

It should also be noted how advantageously the lid 112 provides at least one connection, in this example consisting of a series of connections 53, 54, 55 arranged in its central transparent area 51 and when not in use, can be closed with caps (not shown) and possibly equipped with automatic closing valves.

A first connection 53 is suitable for receiving a rapid coupling 34 provided at the end of the vacuum tube 13 opposite the rapid coupling 26 described above. Said first connection 53 can be equipped with a solenoid valve for venting the tube 13.

A second connection 54 creates an entrance into the tank 17 for insertion, for example, through a funnel 56 of ingredients without opening the lid 112. For this purpose, a valve 57 is arranged on this connection 54, which, for example, can be actuated manually for opening during the insertion phase of the ingredients.

A third connection 55 is suitable for receiving a mixer 58 or other optional device useful for the functioning of the machine 36, by means of a rapid seal coupling. Figure 7 shows it closed by a cap 59.

The hinged arrangement 52 equipped with anti-crushing safety pistons 32 for the operator, given the significant weight of the lid 112, allows a rapid assembly of the lid above the lid wall C of the machine 36 without the use of any tool.

Also in this case, the container 37 of said machine 36, containing the substance to be treated (for example a liquid mixture), is hermetically sealed by means of the lid 112.

The hermetic seal between the container 37 and the lid 112 is ensured by means of a circumferential seal 38 of the container 37 which cooperates with a complementary seal of the lid 112 (not shown).

Advantageously, an assembly has thus been created for the production of vacuum that is completely independent of the type of machine for the treatment of food substances, i.e. that can be applied to various machines having different configurations, and which allows dynamic vacuum cooking, simultaneous with the thermo-mechanical process of the machine.

All of this unlike the vacuum production assemblies of the state of the prior art that are intended solely for the static storage of raw materials.

The objective mentioned in the preamble of the description has thus been achieved.

The protection scope of the present invention is defined by the enclosed claims.

## Claims

1. An assembly for the production of vacuum that can be applied to a machine (36) for the treatment of food substances, dynamically and simultaneously with the thermo-mechanical process performed by said machine (36), comprising, in combination: a group (11) for the production of vacuum, a flexible tube (13) and a lid (12, 112), wherein said flexible tube (13) is operatively connected at one end to said group (11) for the production of vacuum and at the opposite end to said lid (12; 112) suitable for being applied as a seal for the hermetic closure of a container (37) of said machine (36) for the treatment of food substances, in particular liquid mixtures contained within said container, **characterized in that** said container (37) that receives said lid (12,112) is part of said machine (36) for the treatment of food substances and said group (11) comprises a socket (25) for inserting a rapid coupling (26) provided at one end of said flexible tube (13) and said lid (12, 112) provides at least one connection (33,53, 54, 55) for a rapid coupling (34) provided at the end of the flexible tube (13) opposite to the coupling (26).

2. The assembly according to claim 1, **characterized in that** said group (11) for the production of vacuum consists of a casing or body (14) containing a vacuum pump (114) equipped with a vacuum sensor (15), a non-return valve (16), and a water tank (17) with a lid (18), the water being fed to the tank (17) through a water inlet (21) and being discharged through a water drain (22).

3. The assembly according to claim 1, **characterized in that** said group (11) comprises a dry-running pump with a removable vapour filtering device.

4. The assembly according to any of the previous claims, **characterized in that** said group (11) is also provided with a power supply cable (23) and a cable (24) for connection to said machine (36) suitable for the treatment of food substances.

5. The assembly according to any of the previous claims, **characterized in that** said group (11) is provided with an antenna for receiving/transmitting the commands from said machine (36) via wireless connection.

6. The assembly according to any of the previous claims, **characterized in that** said group (11) further comprises an electrical panel (19) and a control keyboard (20).

7. The assembly according to claim 1, **characterized in that** said lid (12) is made of stainless steel, and is structurally composed of a rounded body (27) which is supported by a handle-frame (28).

8. The assembly according to claim 7, **characterized in that** said handle-frame (28) generally has a "U"-shaped configuration with a stiffening crossbar (29) which is provided in the centre with an articulated suspension joint (30) of the lid (12).

9. The assembly according to claim 8, **characterized in that** said handle-frame (28), generally having a "U"-shaped configuration, has at least one anti-crushing safety piston (32) at the free ends.

10. The assembly according to claim 9, **characterized in that** said handle-frame (28) at the free ends is provided with respective female couplings (31) suitable for coupling, in a freely removable way, with respective male couplings (31') provided on the lid C of the machine (36).

11. The assembly according to claim 10, **characterized in that** an anti-crushing safety piston (32) for the operator is interposed between at least one of said female couplings (31) and the corresponding arm (B) of said handle-frame (28).

12. The assembly according to claim 9, **characterized in that** the free end of the stem of said piston (32) is articulatedly hinged around a fulcrum (F) on the arm (B) of the handle-frame (28), whereas the free end of the cylinder of said piston (32) is articulatedly hinged around a fulcrum (F') of an ear (O) rotatably connected to the rotation axis (X) of the handle-frame (28).

13. The assembly according to claim 1, **characterized in that** an air-vent valve (35) is also provided in correspondence with said rapid coupling (34).

14. The assembly according to any of the previous claims, **characterized in that** the container (37) of said machine (36), containing the substance to be treated is hermetically sealed by means of the lid (112,12), the hermetic seal between the container (37) and the lid (112,12) being ensured by means of a circumferential seal (38) of the container (37) which cooperates with a complementary seal of the lid (12).

15. The assembly according to any of the previous claims from 1 to 7, **characterized in that** said lid (112) has an external annular structural part (50), made of stainless steel or food-grade aluminium, and a central area (51).

16. The assembly according to claim 15, **characterized in that** said central area (51) is transparent for seeing the inside of the container (37).

17. The assembly according to claim 15 or 16, **characterized in that** said lid (112) in its external structural part (50) is coupled with the lid wall (C) of the machine (36) by means of a hinged arrangement (52) equipped with anti-crushing safety pistons (32) for the operator.

18. The assembly according to any of the previous claims from 15 to 17, **characterized in that** said lid (112) provides a series of connections (53, 54, 55) arranged in its central area (51), and when not in operation, can be closed with caps.

19. The assembly according to any of the previous claims from 15 to 18, **characterized in that** said lid (112) has a series of connections (53, 54, 55) arranged in its central area (51), equipped with automatic closing valves.

20. The assembly according to claim 19, **characterized in that** said first connection (53) is equipped with a solenoid valve for venting the tube (13).

21. The assembly according to claim 18, **characterized in that** a second connection (54) forms an entry into the container (37) for the insertion of ingredients, through a funnel 56, without opening the lid (112).

22. The assembly according to claim 21, **characterized in that** said second connection (54) is equipped with a valve (57).

23. The assembly according to claim 18, **characterized in that** a third connection (55) is suitable for receiving a mixer (58).

## Patentansprüche

1. Anordnung zur Erzeugung eines Vakuums, mit welchem eine Maschine (36) zur Verarbeitung von Lebensmittel-Substanzen dynamisch und zeitgleich mit dem von der Maschine (36) ausgeführten thermomechanischen Prozess beaufschlagt werden kann, in Kombination aufweisend: eine Baugruppe (11) zur Erzeugung eines Vakuums, eine biegsame Röhre (13) und eine Kappe (12, 112), wobei die biegsame Röhre (13) an einem Ende mit der Baugruppe (11) zur Erzeugung eines Vakuums und an dem gegenüberliegenden Ende mit der Kappe (12, 112), welche dazu geeignet ist als eine Dichtung zur hermetischen Abschottung eines Behälters (37) der Maschine (36) zur Verarbeitung von Lebensmittel-Substanzen, insbesondere von in dem Behälter enthaltenen Flüssigkeitsgemischen, angewandt zu werden, wirkverbunden ist, **dadurch gekennzeichnet, dass** der Behälter (37), welcher die Kappe (12, 112) aufnimmt, als Teil der Maschine (36) zur Verarbeitung von Lebensmittel-Substanzen ausgebildet ist, und dass die Baugruppe (11) eine Fassung (25) zur Aufnahme einer an einem Ende der biegsame Röhre (13) angeordneten Schnellverschluss-Kupplung (26) aufweist, und dass die Kappe (12, 112) mindestens einen Anschluss (33,53, 54, 55) für eine an dem der Kupplung (26) gegenüberliegenden Ende der biegsamen Röhre (13) angeordnete Schnellverschluss-Kupplung (34) bereitstellt.

2. Anordnung nach Anspruch 1, **dadurch gekennzeichnet, dass** die Baugruppe (11) zur Erzeugung eines Vakuums ein Gehäuse oder einen Körper (14) enthaltend eine mit einem Vakuumsensor (15) ausgestatteten Vakuumpumpe (114), ein Rückschlagventil (16) und einen Wassertank (17) mit einer Kappe (18) umfasst, wobei das Wasser dem Tank (17) durch einen Wassereinlass (21) zugeführt wird und durch einen Wasserabfluss (22) abgeführt wird.

3. Anordnung nach Anspruch 1, **dadurch gekennzeichnet, dass** die Baugruppe (11) eine Trockenlaufpumpe mit einer entnehmbaren Dampffiltervorrichtung aufweist.

4. Anordnung nach einem der vorhergehenden Ansprüche, **dadurch gekennzeichnet, dass** die Baugruppe (11) zusätzlich mit einem Energieversorgungskabel (23) und einem Kabel (24) zur Verbindung mit der Maschine (36), welche zur Verarbeitung von Lebensmittel-Substanzen geeignet ist, ausgestattet ist.

5. Anordnung nach einem der vorhergehenden Ansprüche, **dadurch gekennzeichnet, dass** die Baugruppe (11) mit einer Antenne zum Empfangen/Übertragen von Befehlen von der Maschine (36) mittels drahtloser Kommunikation ausgestattet ist.

6. Anordnung nach einem der vorhergehenden Ansprüche, **dadurch gekennzeichnet, dass** die Baugruppe (11) weiterhin ein elektrisches Panel (19) und eine Steuerungstastatur (20) aufweist.

7. Anordnung nach einem der vorhergehenden Ansprüche, **dadurch gekennzeichnet, dass** die Kappe (12) aus Edelstahl gefertigt ist und aus einem abgerundeten Körper (27) besteht, welcher durch einen Griffrahmen (28) gestützt wird.

8. Anordnung nach Anspruch 7, **dadurch gekennzeichnet, dass** der Griffrahmen (28) eine im Wesentlichen "U"-förmige Ausgestaltung mit einer verstärkenden Querstrebe (29), welche zentral mit einer gelenkartigen Aufhängungsverbindung (30) der Kappe (12) bereitgestellt ist, aufweist.

9. Anordnung nach Anspruch 8, **dadurch gekennzeichnet, dass** der Griffrahmen (28), welcher eine im Wesentlichen "U"-förmige Ausgestaltung aufweist, mindesten einen Anti-Quetsch Sicherheitskolben (32) aufweist.

10. Anordnung nach Anspruch 9, **dadurch gekennzeichnet, dass** der Griffrahmen (28) an den freien Enden mit entsprechenden Innengewindekupplungen (31) ausgestattet ist, welche dazu geeignet sind, in einer frei entnehmbaren Art, mit entsprechenden auf der Kappe C der Maschine (36) angebrachten Außengewindekupplungen (31') gekoppelt zu werden.

11. Anordnung nach Anspruch 10, **dadurch gekennzeichnet, dass** ein Anti-Quetsch Sicherheitskolben (32) für den Anwender zwischen mindestens einer der Außengewindekopplungen (31) und dem entsprechenden Arm (B) des Griffrahmens (28) angeordnet ist.

12. Anordnung nach Anspruch 9, **dadurch gekennzeichnet, dass** das freie Ende des Stiels des Kolbens (32) auf dem Arm (B) des Griffrahmens (28) gelenkartig um einen Angelpunkt (F) drehbar ausgebildet ist, wobei das freie Ende des Zylinders des Kolbens (32) gelenkartig um einen Angelpunkt (F') eines drehbar mit der Drehachse (X) des Griffrahmens (28) verbundenen Vorsprungs (O) drehbar ausgebildet ist.

13. Anordnung nach Anspruch 1, **dadurch gekennzeichnet, dass** weiterhin ein Belüftungsventil (35) in Verbindung mit der Schnellverschluss-Kupplung (34) bereitgestellt wird.

14. Anordnung nach einem der vorhergehenden Ansprüche, **dadurch gekennzeichnet, dass** der Behälter (37) der Maschine (36), welcher die zu verarbeitende Substanz beinhaltet, durch die Kappe (112,12), abgedichtet ist, wobei die hermetische Abdichtung zwischen dem Behälter (37) und der Kappe (112,12) durch eine umlaufende Abdichtung (38) des Behälters (37), welche mit einer entsprechenden Abdichtung der Kappe (12) zusammenwirkt, gewährleistet wird.

15. Anordnung nach einem der vorhergehenden Ansprüche 1 bis 7, **dadurch gekennzeichnet, dass** die Kappe (112) einen äußeren ringförmigen Strukturabschnitt (50), welcher aus Edelstahl oder lebensmittelechtem Aluminium gefertigt ist, und einen zentralen Bereich (51) aufweist.

16. Anordnung nach Anspruch 15, **dadurch gekennzeichnet, dass** der zentrale Bereich (51) zur Beobachtung des Inneren des Behälters (37) transparent ausgebildet ist.

17. Anordnung nach Anspruch 15 oder 16, **dadurch gekennzeichnet, dass** die Kappe (112) in ihrem äußeren Strukturabschnitt (50) über eine drehbare Anordnung (52), welche mit Anti-Quetsch Sicherheitskolben (32) für den Anwender versehen ist, mit der Kappenwand (C) der Maschine (36) gekoppelt ist.

18. Anordnung nach einem der vorhergehenden Ansprüche 15 bis 17, **dadurch gekennzeichnet, dass** die Kappe (112) eine Reihe von Anschlüssen (53, 54, 55), welche in ihrem zentralen Bereich (51) angeordnet sind und, wenn nicht in Verwendung, mit Deckeln verschlossen werden können, bereitstellt.

19. Anordnung nach einem der vorhergehenden Ansprüche 15 bis 18, **dadurch gekennzeichnet, dass** die Kappe (112) eine Reihe von Anschlüssen (53, 54, 55) aufweist, welche in ihrem zentralen Bereich (51) angeordnet und mit automatisch schließenden Ventilen ausgestattet sind.

20. Anordnung nach Anspruch 19, **dadurch gekennzeichnet, dass** der erste Anschluss (53) mit einem Elektromagnetventil zur Entlüftung der Röhre (13) ausgestattet ist.

21. Anordnung nach Anspruch 18, **dadurch gekennzeichnet, dass** ein zweiter Anschluss (54) einen Eingang in den Behälter (37) für die Einführung von Zutaten durch einen Trichter 56 ohne Öffnung der Kappe (112) bildet.

22. Anordnung nach Anspruch 21, **dadurch gekennzeichnet, dass** der zweite Anschluss (54) mit einem Ventil (57) ausgestattet ist.

23. Anordnung nach Anspruch 18, **dadurch gekennzeichnet, dass** ein dritter Anschluss (55) zur Aufnahme eines Mischgerätes (58) geeignet ist.

## Revendications

1. Ensemble pour la production de vide qui peut être appliqué à une machine (36) pour le traitement de substances alimentaires, dynamiquement et simultanément au processus thermo-mécanique effectué par ladite machine (36), comprenant, en combinaison : un groupe (11) pour la production de vide, un tube flexible (13) et un couvercle (12, 112), dans lequel ledit tube flexible (13) est fonctionnellement relié à une extrémité audit groupe (11) pour la production de vide et à l'extrémité opposée audit couvercle (12 ; 112) approprié pour être appliqué comme un scellement pour la fermeture hermétique d'un conteneur (37) de ladite machine (36) pour le traitement de substances alimentaires, en particulier de mélanges liquides contenus dans ledit conteneur, **caractérisé en ce que** ledit conteneur (37) qui reçoit ledit couvercle (12,112) fait partie de ladite machine (36) pour le traitement de substances alimentaires et ledit groupe (11) comprend une douille (25) pour insérer un couplage rapide (26) prévu à une extrémité dudit tube flexible (13) et ledit couvercle (12, 112) fournit au moins un connexion (33,53, 54, 55) pour un couplage rapide (34) prévu à l'extrémité du tube flexible (13) opposée au couplage (26).

2. Ensemble selon la revendication 1, **caractérisé en ce que** ledit groupe (11) pour la production de vide se compose d'un boîtier ou d'un corps (14) contenant une pompe à vide (114) équipée d'un capteur de vide (15), d'un clapet anti-retour (16) et d'un réservoir d'eau (17) avec un couvercle (18), l'eau étant alimentée dans le réservoir (17) par une entrée d'eau (21) et étant évacuée par une évacuation d'eau (22).

3. Ensemble selon la revendication 1, **caractérisé en ce que** ledit groupe (11) comprend une pompe fonctionnant à sec avec un dispositif de filtrage de vapeur amovible.

4. Ensemble selon l'une quelconque des revendications précédentes, **caractérisé en ce que** ledit groupe (11) est également pourvu d'un câble d'alimentation électrique (23) et d'un câble (24) pour la connexion à ladite machine (36) appropriée pour le traitement de substances alimentaires.

5. Ensemble selon l'une quelconque des revendications précédentes, **caractérisé en ce que** ledit groupe (11) est pourvu d'une antenne pour recevoir/transmettre les commandes de ladite machine (36) via une connexion sans fil.

6. Ensemble selon l'une quelconque des revendications précédentes, **caractérisé en ce que** ledit groupe (11) comprend en outre un panneau électrique (19) et un clavier de commande (20).

7. Ensemble selon la revendication 1, **caractérisé en ce que** ledit couvercle (12) est en acier inoxydable et est structurellement composé d'un corps arrondi (27) qui est supporté par un cadre à poignée (28).

8. Ensemble selon la revendication 7, **caractérisé en ce que** ledit cadre à poignée (28) a généralement une configuration en forme de « U » avec une traverse de raidissement (29) qui est pourvue au centre d'un joint de suspension articulé (30) du couvercle (12).

9. Ensemble selon la revendication 8, **caractérisé en ce que** ledit cadre à poignée (28), ayant généralement une configuration en forme de « U », a au moins un piston de sécurité anti-écrasement (32) aux extrémités libres.

10. Ensemble selon la revendication 9, **caractérisé en ce que** ledit cadre à poignée (28) aux extrémités libres est pourvu de couplages femelles respectifs (31) appropriés pour le couplage, de manière librement amovible, avec des couplages mâles respectifs (31') prévus sur le couvercle C de la machine (36).

11. Ensemble selon la revendication 10, **caractérisé en ce qu'**un piston de sécurité anti-écrasement (32) pour l'opérateur est interposé entre au moins l'un desdits couplages femelles (31) et le bras correspondant (B) dudit cadre à poignée (28).

12. Ensemble selon la revendication 9, **caractérisé en ce que** l'extrémité libre de la tige dudit piston (32) est articulée à charnière autour d'un pivot (F) sur le bras (B) du cadre à poignée (28), tandis que l'extrémité libre du cylindre dudit piston (32) est articulée à charnière autour d'un pivot (F') d'une oreille (O) reliée de manière rotative à l'axe de rotation (X) du cadre à poignée (28).

13. Ensemble selon la revendication 1, **caractérisé en ce qu'**une vanne d'aération (35) est également prévue en correspondance avec ledit couplage rapide (34).

14. Ensemble selon l'une quelconque des revendications précédentes, **caractérisé en ce que** le conteneur (37) de ladite machine (36), contenant la substance à traiter, est hermétiquement scellé au moyen du couvercle (112,12), le scellement hermétique entre le conteneur (37) et le couvercle (112,12) étant assuré au moyen d'un scellement circonférentiel (38) du conteneur (37) qui coopère avec un scellement complémentaire du couvercle (12).

15. Ensemble selon l'une quelconque des revendications précédentes 1 à 7, **caractérisé en ce que** ledit couvercle (112) a une partie structurelle annulaire externe (50), faite d'acier inoxydable ou d'aluminium de qualité alimentaire, et une zone centrale (51).

16. Ensemble selon la revendication 15, **caractérisé en ce que** ladite zone centrale (51) est transparente pour voir l'intérieur du conteneur (37).

17. Ensemble selon la revendication 15 ou 16, **caractérisé en ce que** ledit couvercle (112) dans sa partie structurelle externe (50) est couplé à la paroi de couvercle (C) de la machine (36) au moyen d'un agencement articulé (52) équipé de pistons de sécurité anti-écrasement (32) pour l'opérateur.

18. Ensemble selon l'une quelconque des revendications précédentes 15 à 17, **caractérisé en ce que** ledit couvercle (112) fournit une série de connexions (53, 54, 55) agencées dans sa zone centrale (51), et lorsqu'il n'est pas en fonctionnement, peut être fermé avec des bouchons.

19. Ensemble selon l'une quelconque des revendications précédentes 15 à 18, **caractérisé en ce que** ledit couvercle (112) a une série de connexions (53, 54, 55) agencées dans sa zone centrale (51), équipées de vannes à fermeture automatique.

20. Ensemble selon la revendication 19, **caractérisé en ce que** ladite première connexion (53) est équipée d'une vanne électromagnétique pour ventiler le tube (13).

21. Ensemble selon la revendication 18, **caractérisé en ce qu'**une seconde connexion (54) forme une entrée dans le conteneur (37) pour l'insertion d'ingrédients, à travers un entonnoir 56, sans ouvrir le couvercle (112).

22. Ensemble selon la revendication 21, **caractérisé en ce que** ladite seconde connexion (54) est équipée d'une vanne (57).

23. Ensemble selon la revendication 18, **caractérisé en ce qu'**une troisième connexion (55) est appropriée pour recevoir un mélangeur (58).
